# EUROPÄISCHE PATENTSCHRIFT

(11) **EP 4 355 675 B1**
(45) Veröffentlichungstag und Bekanntmachung des Hinweises auf die Patenterteilung: **13.08.2025**
(21) Anmeldenummer: 22733953.8
(22) Anmeldetag: 15.06.2022
(51) Int. Cl.: B65H 37/00, B65H 35/00, B29C 65/00

(54) **APPLIKATIONSVORRICHTUNG MIT EINER HELIXZUFÜHRUNG, ROBOTERVORRICHTUNG UND FERTIGUNGSSYSTEM**
APPLICATION DEVICE HAVING A HELIX FEED, ROBOT DEVICE AND PRODUCTION SYSTEM
DISPOSITIF D'APPLICATION DOTÉ D'UNE ALIMENTATION EN HÉLICE, DISPOSITIF ROBOT ET SYSTÈME DE FABRICATION

(30) Priorität: 16.06.2021 DE 102021206171
(43) Veröffentlichungstag der Anmeldung: 24.04.2024
(73) Patentinhaber: TESA SE, 22848 Norderstedt (DE)
(72) Erfinder: AKIN, Deniz Nick, 22305 Hamburg (DE); HIMMELSBACH, Peter, 21614 Buxtehude (DE); ROHDE, Marten, 29553 Bienenbüttel (DE); WIENZEK, Tristan, 22179 Barsbüttel (DE); GERDSMANN, Thomas, 22529 Hamburg (DE)
(74) Vertreter: tesa SE
(86) Internationale Anmeldenummer: PCT/EP2022/066371
(87) Internationale Veröffentlichungsnummer: WO 2022/263547

(56) Entgegenhaltungen:
- WO-A1-2021/087622
- US-A1- 2006 054 272
- US-A1- 2019 070 732

## Beschreibung

Die vorliegende Erfindung betrifft eine Applikationsvorrichtung, eine Robotervorrichtung und ein Fertigungssystem.

Applikationsvorrichtungen sind aus dem Stand der Technik bekannt. Die Applikationsvorrichtungen weisen eine Applikationseinheit auf, die ausgestaltet ist, ein Band auf ein Werkstück aufzubringen. Häufig weist die Applikationseinheit ein Eingangsführungselement auf, über das der Applikationseinheit das Band zugeführt werden kann.

Generell ist es wünschenswert, bei diesen Applikationsvorrichtungen möglichst viel Bandmaterial bereitzustellen, das in einem Stück und ohne manuellen Eingriff bei dem Aufbringen des Bandes verwendet werden kann. Grundsätzlich ist es möglich, das gesamte Bandmaterial direkt an der Applikationsvorrichtung vorzusehen. Für den Fall, dass die Applikationsvorrichtung mithilfe eines Roboterarms einer Robotervorrichtung bewegt wird, ist jedoch die Menge des direkt an der Applikationsvorrichtung vorgesehenen Bandmaterials durch sein Gewicht begrenzt, da bei steigendem Gewicht, das durch den Roboterarm transportiert werden muss, die Präzision beim Aufbringen des Bandes auf das Werkstück abnimmt und der Platzbedarf einer Robotervorrichtung mit einem Roboterarm zunimmt, der ein hohes Gewicht transportieren muss. Außerdem ist es grundsätzlich möglich, das Bandmaterial mithilfe eines Bandspenders bereitzustellen, der auf einem Boden einer Fertigungshalle platziert ist und nicht zusammen mit der Applikationsvorrichtung über das Werkstück bewegt wird. In diesem Fall ist die Geometrie der Bahnen stark limitiert, entlang derer das Band auf das Werkstück aufgebracht werden kann, insbesondere dann, wenn das gesamte Bandmaterial in einem Stück und ohne manuellen Eingriff auf das Werkstück aufgebracht werden soll.

Aus der EP 2 928 802 A1 ist ein System zum Zuführen von Material zu einer Auflegemaschine bekannt, welches auf mehreren Materialantrieben jeweils mit einer Materialspulen beladen werden kann. Von diesen kann dann Material von der jeweiligen Materialspule über einen jeweiligen Bandweg zu einer Zuführung der Auflegemaschine befördert werden. Nachteilig an dieser Art der Zuführung ist, neben seiner Komplexität und Größe des Zuführungssystems, die Unterteilung in eine Aktivzone und eine Wartungszone in die die mehreren Materialantriebe verfahren werden können, um einen Zugang für Mitarbeiter für Neuladungsarbeiten zu erlauben.

Aus der DE102018200439A1 ist ein Applikator für Stanzteile mit einem Stanzteilband bekannt bei dem entlang eines Haltegurtes Stanzteile angeordnet sind. Das Stanzteilband wird über einen Stempelkopf geführt und die Stanzteile werden mittels des Stempels auf eine Oberfläche aufgedrückt. Nachteilig daran ist, dass die Stanzteilrolle und eine oder mehrere Aufwickelrollen auf an dem Stempelkopf befestigt sind und bei der Bewegung des Stempelkopfes mitgeführt werden. Dies erhöht das Gewicht, welches durch den Roboterarm bewegt werden muss und somit auch die Trägheitsmomente und macht zudem einen Wechsel der Stanzteilrolle und der Aufwickelrolle erforderlich.

Aus der WO 2021/087622 A1 ist ein System bekannt, das eine Rolle eines mit einem Liner ausgerüsteten Klebebands, einen Auftragskopf, einen Schneidemechanismus und mindestens einen Antriebsvorschubmechanismus umfasst, der so konfiguriert ist, dass er das Klebeband mit einer gesteuerten Geschwindigkeit von der Rolle zum Auftragskopf schaltet, wobei der Auftragskopf so gesteuert werden kann, dass er das Klebeband auf eine Oberfläche oder ein Substrat aufträgt, und wobei der Auftragskopf einen Schneidemechanismus umfasst, der so konfiguriert ist, dass er das Material durchtrennt, während der Liner intakt bleibt.

Es ist Aufgabe der vorliegenden Erfindung, das gesamte Bandmaterial eines Bandes in einem Stück und ohne manuellen Eingriff präzise und platzsparend entlang Bahnen mit freier Geometrie auf ein Werkstück aufzubringen.

Gemäß einem ersten Aspekt der Erfindung wird die genannte Aufgabe durch eine Applikationsvorrichtung mit den Merkmalen des Patentanspruchs 1 gelöst. Die Applikationsvorrichtung weist eine Basiseinheit auf. Die Basiseinheit weist an einem ersten Ende eine Verbindungseinrichtung für ein Fertigungssystem auf. Die Basiseinheit erstreckt sich entlang einer Achse von dem ersten Ende zu einem von der Verbindungseinrichtung entfernten zweiten Ende. Die Applikationsvorrichtung weist eine Applikationseinheit auf. Die Applikationseinheit ist ausgestaltet, ein Band, vorzugsweise Klebeband, auf ein Werkstück aufzubringen. Die Applikationseinheit ist fest mit der Basiseinheit an dem zweiten Ende der Basiseinheit gekoppelt. Die Applikationsvorrichtung weist eine Umlenkeinheit auf. Die Umlenkeinheit ist mit der Basiseinheit um die Achse schwenkbar gekoppelt. Die Applikationseinheit weist ein erstes Eingangsführungselement auf. Über das erste Eingangsführungselement der Applikationseinheit kann das Band zugeführt werden. Die Umlenkeinheit ist so ausgestaltet, dass das Band die Umlenkeinheit so umschlingen kann, dass dann, wenn es über diese von einer axialen Aufnahmeposition, an der es an der Umlenkeinheit zur Anlage kommt, zu einer axialen Abgabeposition, an der es von der Umlenkeinheit gelöst wird, geführt wird, die axiale Aufnahmeposition von der axialen Abgabeposition in axialer Richtung der Achse beabstandet ist. Das erste Eingangsführungselement der Applikationseinheit ist von der axialen Aufnahmeposition in axialer Richtung der Achse beabstandet.

Die Applikationsvorrichtung weist die Basiseinheit auf. Die Basiseinheit bildet einen Abschnitt der Applikationsvorrichtung. Die Basiseinheit weist an dem ersten Ende die Verbindungseinrichtung für das Fertigungssystem auf. Die Verbindungseinrichtung kann ausgestaltet sein, um mit einem Roboterarm einer Robotervorrichtung verbunden zu werden. Die Applikationsvorrichtung kann mithilfe des Roboterarms über das Werkstück bewegt werden. Die Basiseinheit erstreckt sich entlang der Achse von dem ersten Ende zu dem von der Verbindungseinrichtung entfernten zweiten Ende.

Die Applikationsvorrichtung weist eine Applikationseinheit auf. Die Applikationseinheit bildet einen Abschnitt der Applikationsvorrichtung. Die Applikationseinheit ist ausgestaltet, ein Band, vorzugsweise Klebeband, auf ein Werkstück aufzubringen. Das Band kann ein Klebeband sein. Bevorzugt ist das Band ein doppelseitiges Klebeband, wobei das Band auf zwei sich gegenüberliegenden Seiten jeweils eine haftklebrige Oberfläche aufweist. Weiter bevorzugt ist das Band ein einseitiges Klebeband, wobei das Band auf einer Seite eine haftklebrige Oberfläche aufweist und auf der dieser Seite gegenüberliegenden Seite eine nicht haftklebrige Oberfläche aufweist. Das Band kann ein Abschnitt eines Bandverbundes sein. Der Bandverbund kann das Band und einen Träger aufweisen, die miteinander verbunden sind. Um das Band auf das Werkstück aufzubringen, kann das Band von dem Träger gelöst werden. Das Band kann mit der Seite, die eine haftklebrige Oberfläche aufweist, mit dem Träger verbunden sein. Beim Lösen des Bandes und des Trägers voneinander kann die haftklebrige Oberfläche freigelegt werden, mit der das Band auf das Werkstück aufgebracht werden kann. Insbesondere ist vorgesehen, dass das Band und der Träger bis zu dem Abschnitt des Bandverbundes miteinander verbunden sind an dem das Band von dem Träger gelöst wird, um das Band auf das Werkstück aufzubringen. Hierbei kann der Bandverbund durch die Applikationsvorrichtung in eine Richtung geführt werden und entlang dieser Richtung gesehen kann ab dem Punkt an dem das Band von dem Träger gelöst wird, der Träger alleine, ohne das Band, durch die Applikationsvorrichtung geführt werden.

Die Applikationseinheit ist fest mit der Basiseinheit an dem zweiten Ende der Basiseinheit gekoppelt. Die feste Kopplung zwischen der Basiseinheit und der Applikationseinheit gewährleistet, dass die Applikationseinheit einer Bewegung der Basiseinheit folgt. Insbesondere dann, wenn die Basiseinheit mithilfe des Roboterarms der Robotervorrichtung bewegt wird, folgt die Applikationseinheit dieser Bewegung, sodass das Band auf das Werkstück entlang einer Bahn aufgebracht werden kann, die durch die Bewegung der Basiseinheit definiert ist. Insbesondere gewährleistet die feste Kopplung zwischen der Basiseinheit und der Applikationseinheit, dass dann, wenn die Basiseinheit um die Achse verschwenkt wird, die Applikationseinheit zusammen mit der Basiseinheit um die Achse verschwenkt wird. Die feste Kopplung der Basiseinheit und der Applikationseinheit ist an dem zweiten Ende der Basiseinheit vorgesehen. Für die feste Kopplung zwischen der Basiseinheit und der Applikationseinheit kann ein Kopplungselement an dem zweiten Ende der Basiseinheit vorgesehen sein, das sich von der Achse weg zu einem freien Ende erstreckt, an dem die Applikationseinheit angebracht ist. Insbesondere können für die feste Kopplung zwischen der Basiseinheit und der Applikationseinheit auch zwei oder mehr als zwei Kopplungselemente an dem zweiten Ende der Basiseinheit vorgesehen sein, die sich jeweils von der Achse weg zu einem freien Ende erstrecken, an dem die Applikationseinheit angebracht ist.

Die Applikationsvorrichtung weist eine Umlenkeinheit auf. Die Umlenkeinheit bildet einen Abschnitt der Applikationsvorrichtung. Die Umlenkeinheit ist mit der Basiseinheit um die Achse schwenkbar gekoppelt. Diese schwenkbare Kopplung zwischen der Basiseinheit und der Umlenkeinheit gewährleistet, dass dann, wenn die Basiseinheit und somit auch die Applikationseinheit um die Achse verschwenkt werden, die Umlenkeinheit relativ zu der Umgebung der Applikationsvorrichtung nicht um die Achse verschwenkt wird oder zumindest unabhängig von der Schwenkbewegung der Basiseinheit und der Applikationseinheit um die Achse verschwenkt werden kann. Insbesondere dann, wenn die Applikationsvorrichtung mithilfe des Roboterarms der Robotervorrichtung bewegt wird, folgt die Umlenkeinheit dieser Bewegung in dem Sinne, dass die Position der Umlenkeinheit zusammen mit der Position der Basiseinheit und der Position der Applikationseinheit verändert wird, die Orientierung der Umlenkeinheit sich jedoch unabhängig von der Orientierung der Basiseinheit und der Orientierung der Applikationseinheit ändern kann. Insbesondere bei einer Änderung der Orientierung der Basiseinheit und eine Änderung der Orientierung der Applikationseinheit muss sich die Orientierung der Umlenkeinheit nicht zwingend ändern. Wenn nun das Band auf das Werkstück aufgebracht wird, kann es notwendig sein, dass die Applikationseinheit ihre Orientierung ändert, beispielsweise dann, wenn die Bahn entlang derer das Band auf das Werkstück aufgebracht wird, eine in sich geschlossene Bahn bildet, wie beispielsweise eine rechteckig geformte Bahn oder eine kreisförmige Bahn. Dadurch, dass die Umlenkeinheit mit der Basiseinheit um die Achse schwenkbar gekoppelt ist, kann, während der Bewegung der Applikationseinheit zum Formen der geschlossenen Bahn, die Umlenkeinheit ihre Orientierung insbesondere gegenüber einem Bandspender, der auf einem Boden einer Fertigungshalle platziert ist, konstant halten oder nur minimal ändern. Dadurch, dass die Umlenkeinheit ihre Orientierung gegenüber dem Bandspender konstant halten oder nur minimal ändern kann, ist gewährleistet, dass das Band so geführt werden kann, dass es von der Umlenkeinheit während der gesamten Bewegung der Applikationseinheit zum Formen der geschlossenen Bahn immer in demselben Abschnitt der Umlenkeinheit aufgenommen werden kann. Insbesondere kann das Band unabhängig von der Position und Orientierung der Applikationseinheit in demselben Abschnitt der Umlenkeinheit aufgenommen werden. Dies gilt für jede denkbare Form der Bahn, entlang derer das Band auf das Werkstück aufgebracht wird. Die schwenkbare Kopplung zwischen der Basiseinheit und der Umlenkeinheit gewährleistet, dass das Band entlang Bahnen mit freier Geometrie auf das Werkstück aufgebracht werden kann.

Die Applikationseinheit weist ein erstes Eingangsführungselement auf. Über das erste Eingangsführungselement der Applikationseinheit kann das Band zugeführt werden. Das erste Eingangsführungselement kann eine oder mehrere erste Umlenkrollen aufweisen, die um ihre Drehachse drehbar gelagert sind. Insbesondere kann das erste Eingangsführungselement vier erste Umlenkrollen aufweisen. Die vier ersten Umlenkrollen können so angeordnet sein, dass eine Projektion der Drehachsen auf eine senkrecht zu dem Verlauf des Bands angeordnete Ebene ein Viereck bildet. Alternativ kann das erste Eingangsführungselement drei erste Umlenkrollen aufweisen. Die drei ersten Umlenkrollen können so angeordnet sein, dass eine Projektion der Drehachsen auf eine senkrecht zu dem Verlauf des Bands angeordnete Ebene ein Dreieck bildet. Bevorzugt wird das Band mithilfe der ersten Umlenkrollen so geführt, dass eine Bewegung des Bands in jede Richtung senkrecht zur Führungsrichtung des Bands durch eine erste Umlenkrolle begrenzt ist. Die so angeordneten ersten Umlenkrollen gewährleisten somit eine sichere und zuverlässige Führung des Bands. Die Verwendung von ersten Umlenkrollen ist besonders vorteilhaft, da hierdurch die ersten Umlenkrollen bei einem Kontakt mit dem Band auf diesem abrollen können und somit Reibungsverluste durch eine Reibung zwischen dem Band und der Applikationseinheit minimiert werden können.

Die Umlenkeinheit ist so ausgestaltet, dass das Band die Umlenkeinheit so umschlingen kann, dass dann, wenn es über diese von der axialen Aufnahmeposition, an der es an der Umlenkeinheit zur Anlage kommt, zu der axialen Abgabeposition, an der es von der Umlenkeinheit gelöst wird, geführt wird, die axiale Aufnahmeposition von der axialen Abgabeposition in axialer Richtung der Achse beabstandet ist. Das Band kann also die Umlenkeinheit so umschlingen, dass das Band an der axialen Aufnahmeposition mit der Umlenkeinheit zur Anlage kommt. Bevorzugt kommt das Band mit einer dritten Umlenkrolle der Umlenkeinheit zur Anlage. Die Anlage des Bandes an der Umlenkeinheit definiert die axiale Aufnahmeposition. Weiter kann das Band die Umlenkeinheit so umschlingen, dass das Band an der axialen Abgabeposition von der Umlenkeinheit gelöst wird. Die Stelle, an der das Band von der Umlenkeinheit gelöst wird, definiert die axiale Abgabeposition. Bevorzugt wird das Band von einer dritten Umlenkrolle der Umlenkeinheit gelöst. Das Band wird über die Umlenkeinheit von der axialen Aufnahmeposition zu der axialen Abgabeposition geführt. In Führungsrichtung gesehen, in die das Band um die Umlenkeinheit geführt wird, passieren Abschnitte des Bandes zuerst die axiale Aufnahmeposition und anschließend die axiale Abgabeposition. Die axiale Aufnahmeposition ist von der axialen Abgabeposition in axialer Richtung der Achse beanstandet. Die Beabstandung der axialen Aufnahmeposition von der axialen Abgabeposition in axialer Richtung der Achse gewährleistet, dass, bei einer Bewegung der Applikationseinheit, sich der Abschnitt des Bandes zwischen dem Bandspender und der axialen Aufnahmeposition nicht mit dem Abschnitt des Bandes zwischen der axialen Abgabeposition und der Applikationseinheit berührt. Bevorzugt kann das Band die Umlenkeinheit teilweise oder zumindest einmal vollständig umschlingen. Ein vollständiges Umschlingen der Umlenkeinheit durch das Band kann dann gegeben sein, wenn eine parallel zu der Achse verlaufende Gerade die axiale Aufnahmeposition und die axiale Abgabeposition schneidet und hierbei das Band lediglich bei der axialen Aufnahmeposition und der axialen Abgabeposition schneidet. Ebenso kann ein zweimaliges vollständiges Umschlingen der Umlenkeinheit durch das Band dann gegeben sein, wenn die parallel zu der Achse verlaufende Gerade die axiale Aufnahmeposition und die axiale Abgabeposition schneidet und hierbei das Band sowohl bei der axialen Aufnahmeposition als auch bei der axialen Abgabeposition schneidet und zusätzlich das Band zwischen der axialen Aufnahmeposition und der axialen Abgabeposition schneidet. Ähnlich kann ein dreimaliges, viermaliges, fünfmaliges, etc. Umschlingen der Umlenkeinheit durch das Band definiert sein.

Das erste Eingangsführungselement der Applikationseinheit ist von der axialen Aufnahmeposition in axialer Richtung der Achse beabstandet. Die Beabstandung des ersten Eingangsführungselements von der axialen Aufnahmeposition in axialer Richtung der Achse gewährleistet, dass dann, wenn die Applikationseinheit relativ zu der Umlenkeinheit verschwenkt wird, sich die axiale Abgabeposition in axialer Richtung verändern kann, die axiale Abgabeposition hierbei jedoch eine axiale Beabstandung von der axialen Aufnahmeposition einhält.

Zusammenfassend kann also gesagt werden, dass es mit der erfindungsgemäßen Applikationsvorrichtung möglich ist, möglichst viel Bandmaterial bereitzustellen, das in einem Stück und ohne manuellen Eingriff bei dem Aufbringen des Bandes verwendet werden kann. Hierbei ist es nicht notwendig das gesamte Bandmaterial direkt an der Applikationsvorrichtung vorzusehen und das gesamte Bandmaterial muss nicht mithilfe eines Roboterarms einer Robotervorrichtung zusammen mit der Applikationsvorrichtung bewegt werden, sodass eine hohe Präzision beim Aufbringen des Bandes auf das Werkstück gewährleistet ist und der Platzbedarf der Robotervorrichtung mit dem Roboterarm gering gehalten werden kann. Vielmehr kann vorgesehen werden, dass das Bandmaterial mithilfe eines Bandspenders bereitgestellt wird, der auf einem Boden einer Fertigungshalle platziert ist. Hierbei ist jedoch die Geometrie der Bahnen nicht limitiert, entlang derer das Band auf das Werkstück aufgebracht werden kann, insbesondere dann, wenn das gesamte Bandmaterial in einem Stück und ohne manuellen Eingriff auf das Werkstück aufgebracht werden soll. Demnach kann das gesamte Bandmaterial eines Bandes in einem Stück und ohne manuellen Eingriff präzise und platzsparend entlang Bahnen mit freier Geometrie auf ein Werkstück aufgebracht werden.

In einer Ausführungsform weist die Umlenkeinheit ein kranzförmiges Element und mindestens zwei Umlenkrollen auf, wobei jede Umlenkrolle der mindestens zwei Umlenkrollen an dem kranzförmigen Element drehbar gelagert ist und eine umlaufende Außenfläche aufweist, mit der die Umlenkrolle beim Führen des Bands auf einem Abschnitt des Bands abrollen kann. Das kranzförmige Element ist kranzförmig und kann aufgrund seiner kranzartigen Form die Basiseinheit zumindest abschnittsweise umgeben. Das kranzförmige Element kann auch als erstes kranzförmiges Element bezeichnet werden. Die Umlenkeinheit kann ein zweites kranzförmiges Element aufweisen. Das zweite kranzförmige Element ist kranzförmig und kann aufgrund seiner kranzartigen Form die Basiseinheit zumindest abschnittsweise umgeben. Die Umlenkeinheit weist die mindestens zwei Umlenkrollen auf. Insbesondere kann die Umlenkeinheit zwei, drei oder vier Umlenkrollen aufweisen. Jede Umlenkrolle der Umlenkeinheit kann auch als dritte Umlenkrolle bezeichnet werden. Jede dritte Umlenkrolle kann entweder an dem ersten kranzförmigen Element oder sowohl an dem ersten kranzförmigen Element als auch an dem zweiten kreisförmigen Element drehbar gelagert sein. Wenn das erste kranzförmige Element vorgesehen ist, kann das erste kranzförmigen Element aufgrund seiner kranzartigen Form gewährleisten, dass die dritten Umlenkrollen gleichmäßig beabstandet zueinander um die Basiseinheit herum angeordnet sein können. Wenn das zweite kranzförmige Element vorgesehen ist, kann das zweite kranzförmige Element aufgrund seiner kranzartigen Form gewährleisten, dass die dritten Umlenkrollen gleichmäßig beabstandet zueinander um die Basiseinheit herum angeordnet sein können. Insbesondere dann, wenn sowohl das erste kranzförmige Element als auch das zweite kranzförmige Element vorgesehen sind, können die dritten Umlenkrollen an ihren beiden Enden mit dem ersten kranzförmigen Element und mit dem zweiten kranzförmigen Element verbunden sein, sodass die dritten Umlenkrollen besonders mechanisch robust innerhalb der Umlenkeinheit befestigt sind. Jede dritte Umlenkrolle weist eine umlaufende Außenfläche auf, mit der die dritte Umlenkrolle beim Führen des Bands auf einem Abschnitt des Bands abrollen kann. Die Verwendung von dritten Umlenkrollen ist besonders vorteilhaft, da hierdurch die dritten Umlenkrollen bei einem Kontakt mit dem Band auf diesem abrollen können und somit Reibungsverluste durch eine Reibung zwischen dem Band und der Umlenkeinheit minimiert werden können.

In einer Ausführungsform verläuft die Drehachse jeder Umlenkrolle der Umlenkrollen schräg zu der Achse. Ein Verlaufen der Drehachsen schräg zu der Achse stellt eine besonders einfache Möglichkeit dar, dass das Band die Umlenkeinheit umschlingen kann und selbst dann, wenn das Band einmal vollständig die Umlenkeinheit umschlingt, nicht mit sich selbst in Kontakt kommt. Weiter gewährleistet ein Verlaufen der Drehachsen schräg zu der Achse, dass das Band, wenn dieses die Umlenkeinheit umschlingt nicht von dieser herunterrutscht.

In einer Ausführungsform bilden die Drehachse jeder Umlenkrolle der Umlenkrollen jeweils mit einer parallel zur Achse verlaufenden Geraden einen Winkel von 1° bis 20°. Es hat sich als vorteilhaft herausgestellt, insbesondere im Zusammenhang mit vier dritten Umlenkrollen, dass handelsübliche Bänder bei einem Winkel von 1° bis 20° dann, wenn diese Bänder zumindest einmal vollständig die Umlenkeinheit umschlingen, nicht mit sich selbst in Kontakt kommen.

In einer Ausführungsform ist die Lage der Drehachse jeder Umlenkrolle der Umlenkrollen zu der Achse einstellbar. Die einstellbaren Drehachsen der Umlenkrollen gewährleisten, dass Bänder mit unterschiedlichen Geometrien verwendet werden können. Insbesondere können, insbesondere abhängig von der Breite eines Bandes, die Drehachsen der Umlenkrollen so eingestellt werden, dass sich das Band nicht selbst berührt, wenn das Band die Umlenkeinheit zumindest einmal vollständig umschlingt.

In einer Ausführungsform weist die Umlenkeinheit ein zweites Eingangsführungselement und einen Schwenkarm auf, der sich von seinem ersten Ende zu seinem zweiten Ende von der Achse weg erstreckt, wobei an dem zweiten Ende das zweite Eingangsführungselement angebracht ist, über das der Umlenkeinheit das Band zugeführt werden kann. Das zweite Eingangsführungselement kann mindestens eine vierte Umlenkrolle aufweisen. Bevorzugt ist jede vierte Umlenkrolle um ihre Drehachse drehbar gelagert. Insbesondere ist vorgesehen, dass das zweite Eingangsführungselement vier vierte Umlenkrollen aufweist. Die vier vierten Umlenkrollen können so angeordnet sein, dass eine Projektion der Drehachsen auf eine senkrecht zu dem Verlauf des Bandes angeordnete Ebene ein Viereck bildet. Alternativ kann das zweite Eingangsführungselement drei vierte Umlenkrollen aufweisen. Die drei vierten Umlenkrollen können so angeordnet sein, dass eine Projektion der Drehachsen auf eine senkrecht zu dem Verlauf des Bands angeordnete Ebene ein Dreieck bildet. Das Band kann mithilfe der vierten Umlenkrollen so geführt werden, dass eine Bewegung des Bandes in jede Richtung senkrecht zur Führungsrichtung des Bandes durch eine vierte Umlenkrolle begrenzt ist. Die so angeordneten vierten Umlenkrollen gewährleisten eine sichere und zuverlässige Führung des Bandes. Die Verwendung von vierten Umlenkrollen ist besonders vorteilhaft, da hierdurch die vierten Umlenkrollen bei einem Kontakt mit dem Band auf diesem abrollen können und somit Reibungsverluste durch eine Reibung zwischen dem Band und der Umlenkeinheit minimiert werden können.

In einer Ausführungsform weist die Basiseinheit eine sich von dem ersten Ende der Basiseinheit entlang der Achse zu dem zweiten Ende der Basiseinheit erstreckende Ausnehmung auf. Die Ausnehmung gewährleistet, dass beispielsweise Kabel oder Schläuche, die das zweite Ende des Roboterarms mit der Applikationseinheit verbinden können, innerhalb der Basiseinheit angeordnet sein können und somit durch die Basiseinheit vor Einwirkungen aus der Umgebung der Basiseinheit, beispielsweise vor Einwirkungen durch die Umlenkeinheit oder das Band oder andere in der Fertigungshalle angeordnete Gegenstände geschützt werden, wie beispielsweise der Bandspender, der ein Rahmen der Robotervorrichtung, das Werkstück oder die Werkstückablage. Die Ausnehmung gewährleistet somit insbesondere, dass die Kabel oder Schläuche durch die Basiseinheit mechanisch geschützt werden.

Gemäß einem zweiten Aspekt der Erfindung wird die eingangs genannte Aufgabe durch eine Robotervorrichtung mit den Merkmalen des Patentanspruchs **Fehler! Verweisquelle konnte nicht gefunden werden.** gelöst. Die Robotervorrichtung weist einen Rahmen und einen Roboterarm auf. Der Roboterarm ist mit seinem ersten Ende an dem Rahmen angebracht und mit seinem zweiten Ende an der Verbindungseinrichtung an dem ersten Ende der Basiseinheit der Applikationsvorrichtung gemäß dem ersten Aspekt der Erfindung angebracht. An dem zweiten Ende des Roboterarms ist ein Aktor vorgesehen, mit dem die Basiseinheit relativ zum zweiten Ende des Roboterarms um die Achse verschwenkt werden kann. Die im Zusammenhang mit der Applikationsvorrichtung gemäß dem ersten Aspekt der Erfindung beschriebenen Merkmale, technischen Effekte und/oder Vorteile gelten zumindest in analoger Weise auch für die Robotervorrichtung gemäß dem zweiten Aspekt der Erfindung, sodass an dieser Stelle auf eine entsprechende Wiederholung verzichtet wird.

Gemäß einem dritten Aspekt der Erfindung wird die eingangs genannte Aufgabe durch ein Fertigungssystem mit den Merkmalen des Patentanspruchs **Fehler! Verweisquelle konnte nicht gefunden werden.** gelöst. Das Fertigungssystem weist eine Robotervorrichtung gemäß dem zweiten Aspekt der Erfindung auf. Weiter weist das Fertigungssystem einen Bandspender mit einer Vorspanneinrichtung auf. Dann, wenn das Band der Applikationsvorrichtung zugeführt wird, wird ein Abschnitt des Bandes von der Vorspanneinrichtung so vorgespannt, dass entlang des Bands eine Vorspannkraft wirkt, die größer als eine vorgegebene Vorspannkraftschwelle ist. Die im Zusammenhang mit der Robotervorrichtung gemäß dem zweiten Aspekt der Erfindung beschriebenen Merkmale, technischen Effekte und/oder Vorteile gelten zumindest in analoger Weise auch für das Fertigungssystem gemäß dem dritten Aspekt der Erfindung, sodass an dieser Stelle auf eine entsprechende Wiederholung verzichtet wird.

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen weiterhin gleiche Bezugszeichen für gleiche oder ähnliche Objekte.
- Figur 1: zeigt eine schematische Ansicht einer Ausführungsform eines erfindungsgemäßen Fertigungssystems,
- Figuren 2 bis 8: zeigen schematische Ansichten einer ersten Ausführungsform einer erfindungsgemäßen Applikationsvorrichtung des Fertigungssystems in Figur 1, und
- Figur 9: zeigt eine schematische Ansicht einer Führung eines Bands um eine Umlenkeinheit einer zweiten Ausführungsform der erfindungsgemäßen Applikationsvorrichtung des Fertigungssystems in Figur 1.

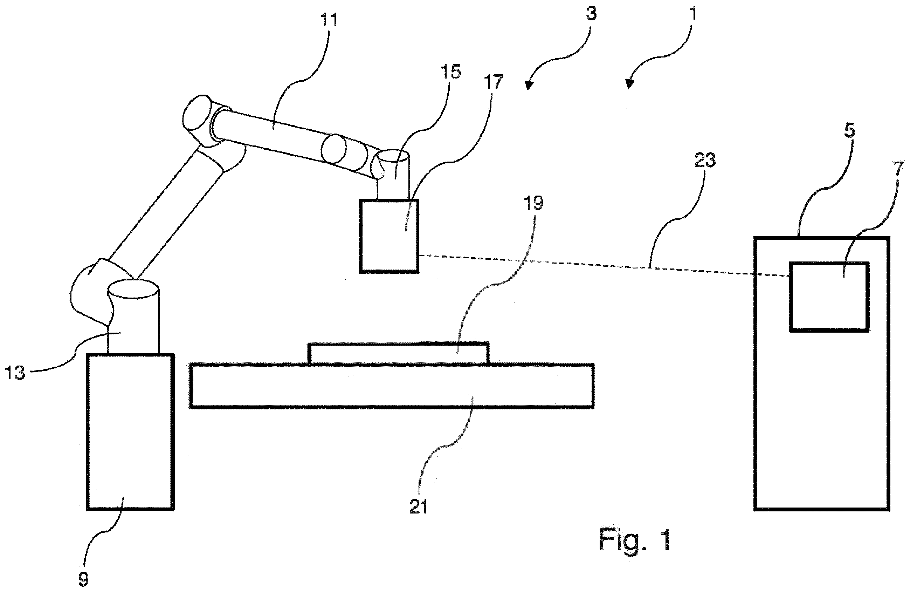

Figur 1 zeigt eine schematische Ansicht einer Ausführungsform eines erfindungsgemäßen Fertigungssystems 1. Das Fertigungssystem 1 weist eine Robotervorrichtung 3 und einen Bandspender 5 auf. Der Bandspender 5 weist eine Vorspanneinrichtung 7 auf. Der Bandspender 5 kann auf einen Boden eine Fertigungshalle platziert werden. Die Robotervorrichtung 3 weist einen Rahmen 9 und einen Roboterarm 11 auf. Der Rahmen 9 kann auf den Boden der Fertigungshalle platziert werden. Der Roboterarm 11 weist ein erstes Ende 13 und ein zweites Ende 15 auf. Der Roboterarm 11 ist mit seinem ersten Ende 13 an dem Rahmen 9 angebracht. Mit seinem zweiten Ende 15 ist der Roboterarm 11 an einer Applikationsvorrichtung 17 der Robotervorrichtung 3 angebracht. In Figur 1 ist ein Werkstück 19 dargestellt. Das Werkstück 19 ist auf einer Werkstückablage 21 angeordnet, die auf dem Boden der Fertigungshalle angeordnet sein kann. Weiter ist in Figur 1 ein Band 23 dargestellt. Beispielsweise kann das Band 23 ein Klebeband sein. Das Band 23 wird von dem Bandspender 5 der Applikationsvorrichtung 17 zugeführt. Ein Abschnitt des Bandes 23 wird von der Vorspanneinrichtung 7 so vorgespannt, dass entlang des Bandes 23 eine Vorspannkraft wirkt, die größer als eine vorgegebene Vorspannkraftschwelle ist. Die Vorspannkraftschwelle wird bevorzugt so gewählt, dass die Vorspannkraft, die entlang des Bandes 23 wirkt, gewährleistet, dass das Band 23 zwischen der Vorspanneinrichtung 7 und der Applikationsvorrichtung 17 entlang einer Geraden verläuft. Der Roboterarm 11 weist mehrere Abschnitte auf, die relativ zueinander bewegbar sind. Mithilfe der relativ zueinander bewegbaren Abschnitte des Roboterarms 11 kann die Applikationsvorrichtung 17 relativ zu dem Werkstück 19 bewegt werden. Dies gewährleistet, dass die Applikationsvorrichtung 17 in unterschiedliche Positionen verfahren werden kann. Insbesondere können sich die Abstände zwischen der Applikationsvorrichtung 17 und der Vorspanneinrichtung 7 des Bandspenders 9 in den unterschiedlichen Positionen der Applikationsvorrichtung 17 unterscheiden. Hierbei gewährleistet die Vorspanneinrichtung 7, dass in jeder Position der Applikationsvorrichtung 17 der Abschnitt des Bandes 23 zwischen der Vorspanneinrichtung 7 und der Applikationsvorrichtung 17 entlang einer Geraden verläuft. Insbesondere ist eine Vielzahl von Geraden vorgesehen, entlang derer sich der Abschnitt des Bandes 23 zwischen der Vorspanneinrichtung 7 und der Applikationsvorrichtung 17 erstrecken kann, wobei jeder Position der Applikationsvorrichtung 17 eine Gerade der Vielzahl von Geraden zugeordnet ist.

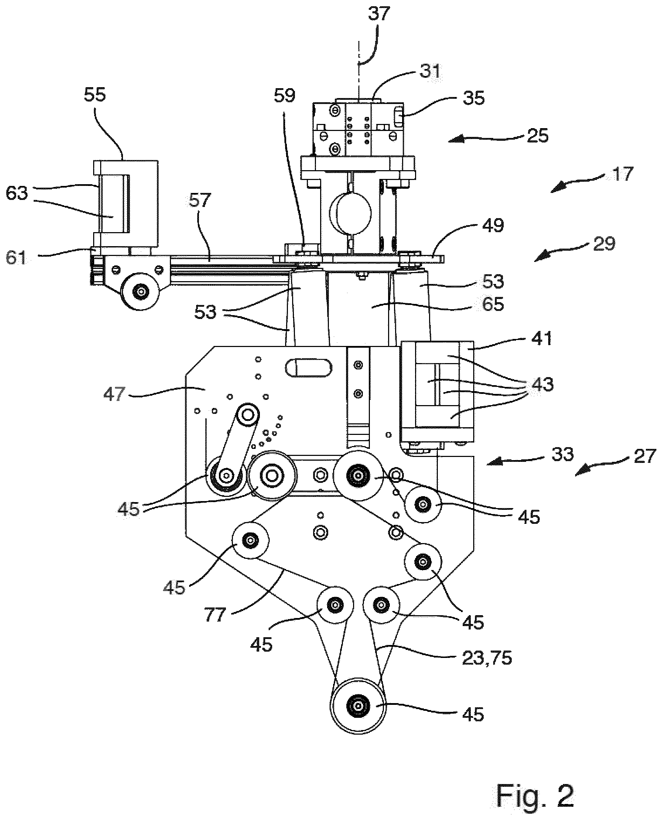

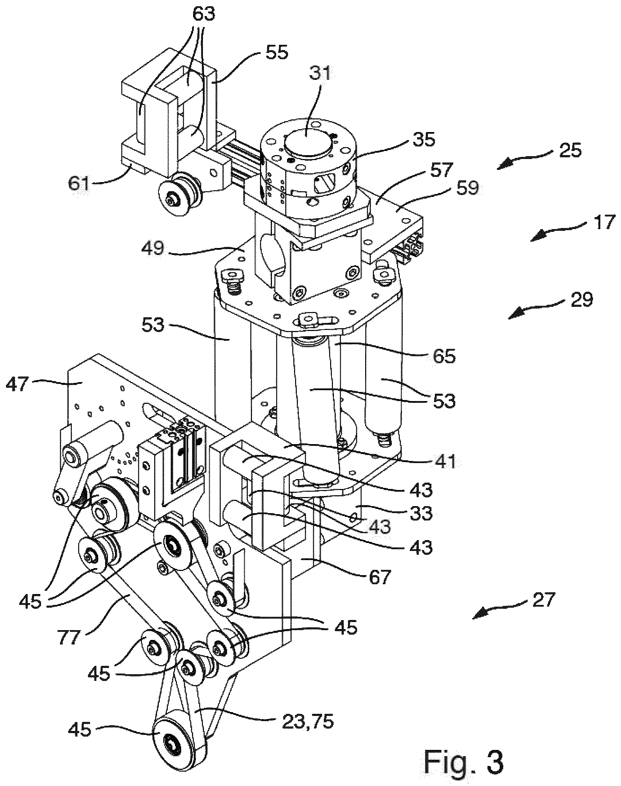

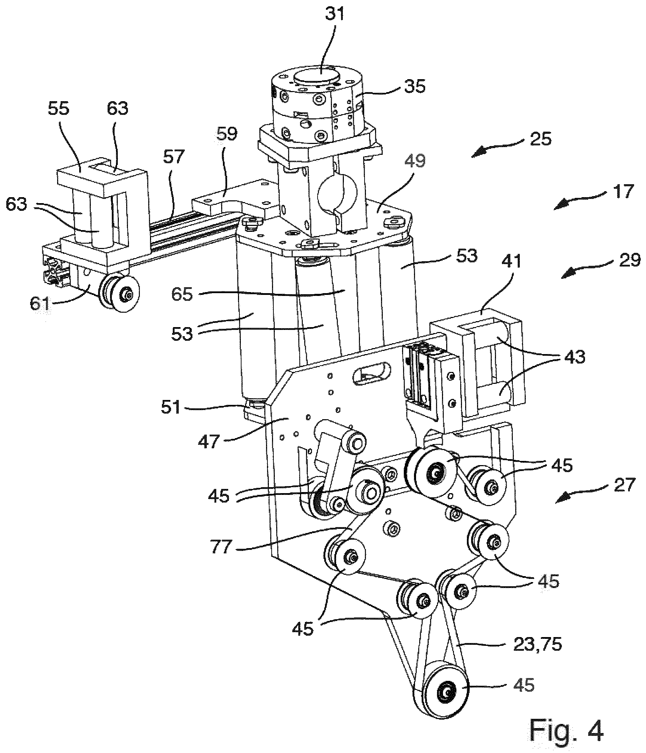

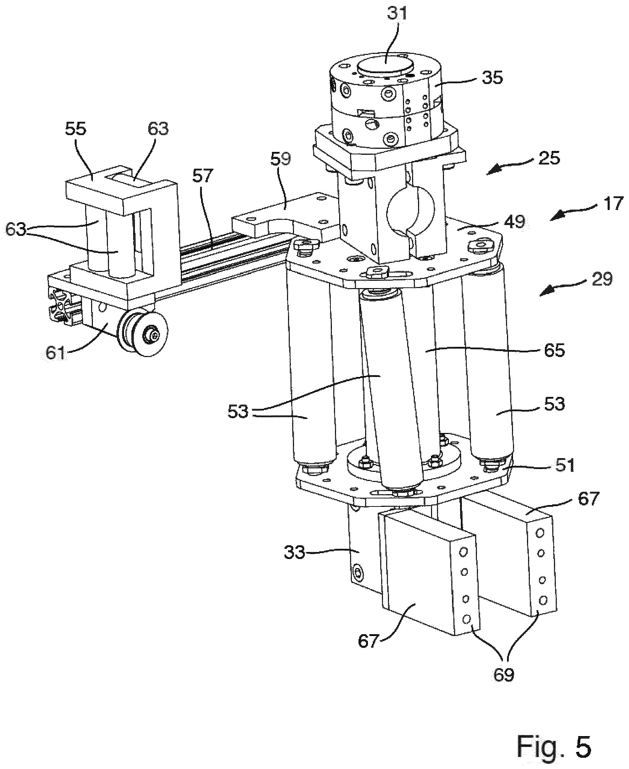

Die Figuren 2 bis 8 zeigen schematische Ansichten einer Ausführungsform einer erfindungsgemäßen Applikationsvorrichtung 17 des Fertigungssystems 1 in Figur 1. Die Applikationsvorrichtung 17 weist eine Basiseinheit 25, eine Applikationseinheit 27 und eine Umlenkeinheit 29.

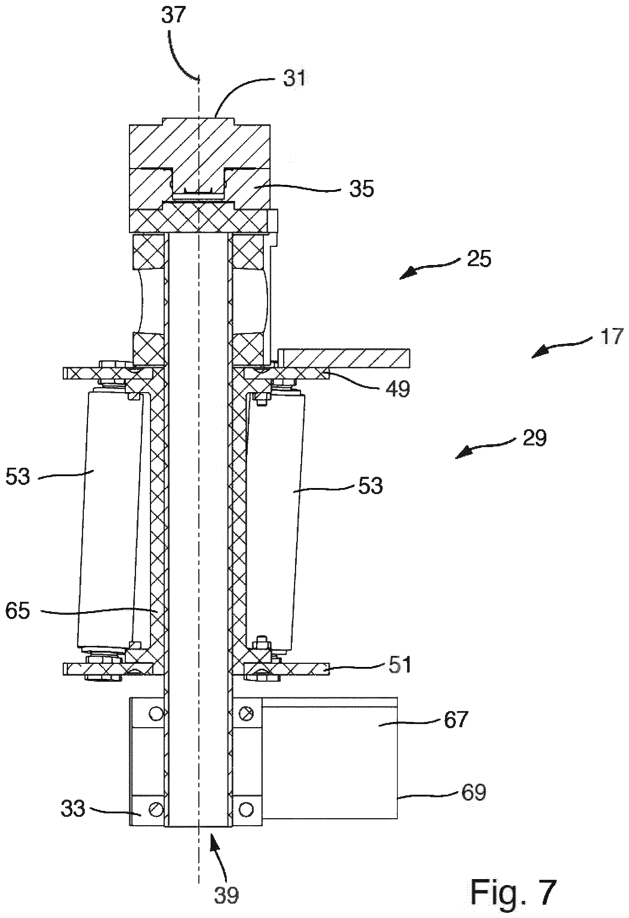

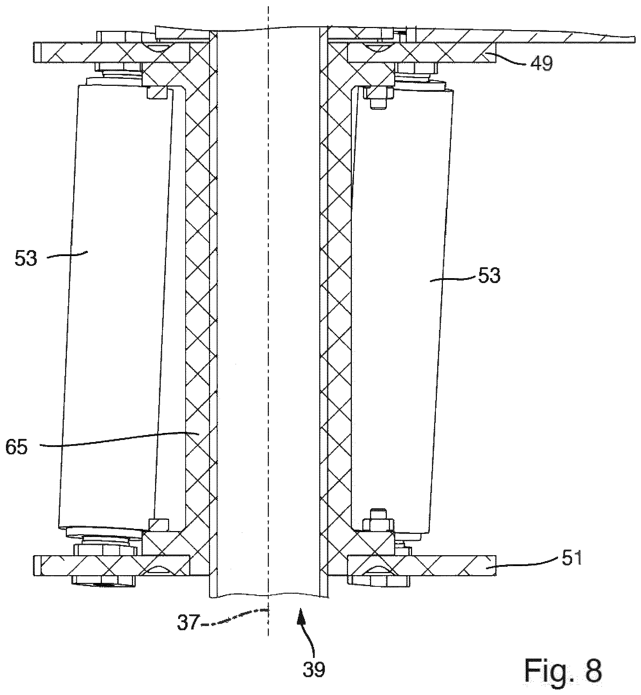

Die Basiseinheit 25 erstreckt sich von einem ersten Ende 31 zu einem zweiten Ende 33. An dem ersten Ende 31 weist die Basiseinheit 25 eine Verbindungseinrichtung 35 für das Fertigungssystem 1 auf. Die Verbindungseinrichtung 35 ist in Figur 1 an dem in Figur 1 dargestellten zweiten Ende 15 des Roboterarms 11 angebracht. An dem zweiten Ende 15 des Roboterarms 11 ist ein Aktor vorgesehen, mit dem die Basiseinheit 25 relativ zum zweiten Ende 15 des Roboterarms 11 um eine Achse 37 verschwenkt werden kann, entlang der sich die Basiseinheit 25 von dem ersten Ende 31 zu dem von der Verbindungseinrichtung 35 entfernten zweiten Ende 33 erstreckt. Die Basiseinheit 25 weist eine sich von dem ersten Ende 31 der Basiseinheit 25 entlang der Achse 37 zu den zweiten Ende 33 der Basiseinheit 25 erstreckende Ausnehmung 39 auf (siehe Figuren 7 und 8). Die Ausnehmung 39 gewährleistet, dass beispielsweise Kabel oder Schläuche, die das zweite Ende 15 des Roboterarms 11 mit der Applikationseinheit 27 verbinden, innerhalb der Basiseinheit 25 angeordnet sein können und somit durch die Basiseinheit 25 vor Einwirkungen aus der Umgebung der Basiseinheit 25, beispielsweise vor Einwirkungen durch die Umlenkeinheit 29 oder das Band 23 oder andere in der Fertigungshalle angeordnete Gegenstände geschützt werden, wie beispielsweise der Bandspender 5, der Rahmen 9, das Werkstück 19 oder die Werkstückablage 21. Die Ausnehmung 39 gewährleistet somit insbesondere, dass die Kabel oder Schläuche durch die Basiseinheit 25 mechanisch geschützt werden.

Die Applikationseinheit 27 weist ein erstes Eingangsführungselement 41 auf. Über das erste Eingangsführungselement 41 kann der Applikationseinheit 27 das Band 23 zugeführt werden. Das erste Eingangsführungselement 41 weist vier erste Umlenkrollen 43 auf, die um ihre Drehachse drehbar gelagerte sind. Die vier ersten Umlenkrollen 43 sind so angeordnet, dass eine Projektion der Drehachsen auf eine senkrecht zu dem Verlauf des Bands 23 angeordnete Ebene ein Viereck bildet. Das Band 23 kann somit mithilfe der ersten Umlenkrollen 43 so geführt werden, dass eine Bewegung des Bands 23 in jede Richtung senkrecht zur Führungsrichtung des Bands 23 durch eine erste Umlenkrolle 43 begrenzt ist. Die so angeordneten ersten Umlenkrollen 43 gewährleisten somit eine sichere und zuverlässige Führung des Bands 23. Die Verwendung von ersten Umlenkrollen 43 ist besonders vorteilhaft, da hierdurch die ersten Umlenkrollen 43 bei einem Kontakt mit dem Band 23 auf diesem abrollen können und somit Reibungsverluste durch eine Reibung zwischen dem Band 23 und der Applikationseinheit 27 minimiert werden können.

Weiter ist die Applikationseinheit 27 ausgestaltet, dass Band 23 auf das Werkstück 19 aufzubringen. Die Applikationseinheit 27 weist zweite Umlenkrollen 45 auf, die um ihre Drehachse drehbar gelagerte sind. Die zweiten Umlenkrollen 45 und das erste Eingangsführungselement 41 sind an einem Plattenelement 47 der Applikationseinheit 27 angebracht. Mithilfe der zweiten Umlenkrollen 45 kann das Band 23 von dem Eingangsführungselement 41 zu einer Oberfläche des Werkstücks 19 geführt werden und auf dieses aufgebracht werden.

Die Umlenkeinheit 29 weist ein kranzförmiges Element 49 auf. Weiter weist die Umlenkeinheit 29 ein weiteres kranzförmiges Element 51 auf. Weiter weist die Umlenkeinheit 29 vier Umlenkrollen 53 auf. Jede Umlenkrolle 53 der Umlenkeinheit 29 kann auch als dritte Umlenkrolle 53 bezeichnet werden. Jede Umlenkrolle 53 der vier Umlenkrollen 53 ist sowohl an dem kranzförmigen Element 49 als auch an dem weiteren kreisförmigen Element 51 drehbar gelagert. Jede Umlenkrolle 53 der vier Umlenkrollen 53 weist eine umlaufende Außenfläche auf, mit der die Umlenkrolle 53 beim Führen des Bands 23 auf einem Abschnitt des Bands 23 abrollen kann. Die vier Umlenkrollen 53 sind so angeordnet, dass die Drehachse jeder Umlenkrolle 53 der Umlenkrollen 53 schräg zu der Achse 37 verläuft. Ein Verlaufen der Drehachsen schräg zu der Achse 37 stellt eine besonders einfache Möglichkeit dar, dass das Band 23 die Umlenkeinheit 29 umschlingen kann und selbst dann, wenn das Band 23 einmal vollständig die Umlenkeinheit 29 umschlingt, nicht mit sich selbst in Kontakt kommt. Weiter sind die vier Umlenkrollen 53 so angeordnet, dass die Drehachse jeder Umlenkrolle 53 der Umlenkrollen 53 jeweils mit einer parallel zur Achse 37 verlaufenden Geraden einen Winkel von 1° bis 20° bilden. Es hat sich als vorteilhaft herausgestellt, insbesondere im Zusammenhang mit vier Umlenkrollen 53, dass handelsübliche Bänder 23 bei einem Winkel von 1° bis 20° dann, wenn diese Bänder 23 zumindest einmal vollständig die Umlenkeinheit 29 umschlingen, nicht mit sich selbst in Kontakt kommen. Weiter ist die Lage der Drehachse jeder Umlenkrolle 53 der vier Umlenkrollen 53 zu der Achse 37 einstellbar. Die einstellbaren Drehachsen der Umlenkrollen 53 gewährleisten, dass Bänder 23 mit unterschiedlichen Geometrien verwendet werden können. Insbesondere können, insbesondere abhängig von der Breite eines Bandes 23, die Drehachsen der Umlenkrollen 53 so eingestellt werden, dass sich das Band 23 nicht selbst berührt, wenn das Band 23 die Umlenkeinheit 29 zumindest einmal vollständig umschlingt.

Weiter weist die Umlenkeinheit 29 ein zweites Eingangsführungselement 55 und einen Schwenkarm 57 auf. Der Schwenkarm 57 erstreckt sich von seinem ersten Ende 59 zu seinem zweiten Ende 61 von der Achse 37 weg. An dem zweiten Ende 61 ist das zweite Eingangsführungselement 55 angebracht. Über das zweite Eingangsführungselement 55 kann der Umlenkeinheit 29 das Band 23 zugeführt werden. Das zweite Eingangsführungselement 55 weist vier vierte Umlenkrollen 63 auf, die um ihre Drehachse drehbar gelagerte sind. Die vier vierten Umlenkrollen 63 sind so angeordnet, dass eine Projektion der Drehachsen auf eine senkrecht zu dem Verlauf des Bandes 23 angeordnete Ebene ein Viereck bildet. Das Band 23 kann somit mithilfe der vierten Umlenkrollen 63 so geführt werden, dass eine Bewegung des Bandes 23 in jede Richtung senkrecht zur Führungsrichtung des Bandes 23 durch eine vierte Umlenkrolle 63 begrenzt ist. Die so angeordneten vierten Umlenkrollen 63 gewährleisten somit eine sichere und zuverlässige Führung des Bandes 23. Die Verwendung von vierten Umlenkrollen 63 ist besonders vorteilhaft, da hierdurch die vierten Umlenkrollen 63 bei einem Kontakt mit dem Band 23 auf diesem abrollen können und somit Reibungsverluste durch eine Reibung zwischen dem Band 23 und der Umlenkeinheit 29 minimiert werden können.

Außerdem weist die Umlenkeinheit 29 ein zylinderförmiges Element 65 auf. Das zylinderförmige Element 65 erstreckt sich von dem kranzförmigen Element 49 zu dem weiteren kranzförmigen Element 51. Das zylinderförmige Element 65 ist an seinem ersten Ende mit dem kranzförmigen Element 49 verschraubt und an seinem zweiten Ende mit dem weiteren kranzförmigen Element 51 verschraubt. Das zylinderförmige Element 65 weist eine sich von seinem ersten Ende zu seinem zweiten Ende erstreckende und durchgehend geschlossene Wandung auf, sodass zwischen dem kranzförmigen Element 49 und dem weiteren kranzförmigen Element 51 die Basiseinheit 25 durch das zylinderförmige Element 65 gegenüber der Umgebung des zylinderförmigen Elements 65 durchgehend geschützt ist. Das zylinderförmige Element 65 bildet eine Ausnehmung, in der ein Abschnitt der Basiseinheit 25 angeordnet ist. Das zylinderförmige Element 65 gewährleistet, dass eine Relativbewegung zwischen der Basiseinheit 25 und der Umlenkeinheit 29 zumindest zwischen dem kranzförmigen Element 49 und dem weiteren kranzförmigen Element 51 von der Umgebung des zylinderförmigen Elements 65 aus nicht erreichbar ist, sodass sich keine Gegenstände, wie beispielsweise das Band 23, zwischen der Basiseinheit 25 und der Umlenkeinheit 29 verfangen können.

Die Basiseinheit 25 ist fest mit der Applikationseinheit 27 gekoppelt. Die feste Kopplung zwischen der Basiseinheit 25 und der Applikationseinheit 27 gewährleistet, dass die Applikationseinheit 27 einer Bewegung der Basiseinheit 25 folgt. Insbesondere dann, wenn die Basiseinheit 25 mithilfe des Roboterarms 11 der Robotervorrichtung 3 bewegt wird, folgt die Applikationseinheit 27 dieser Bewegung, sodass das Band 23 auf das Werkstück 19 entlang einer Bahn aufgebracht werden, die durch die Bewegung der Basiseinheit 25 definiert ist. Insbesondere gewährleistet die feste Kopplung zwischen der Basiseinheit 25 und der Applikationseinheit 27, dass dann, wenn die Basiseinheit 25 um die Achse 37 verschwenkt wird, die Applikationseinheit 27 zusammen mit der Basiseinheit 25 um die Achse 37 verschwenkt wird. Die feste Kopplung der Basiseinheit 25 und der Applikationseinheit 27 ist an dem zweiten Ende 33 der Basiseinheit 25 vorgesehen. Die Applikationseinheit 27 ist also fest mit der Basiseinheit 25 an dem zweiten Ende 33 der Basiseinheit 25 gekoppelt. Für die feste Kopplung zwischen der Basiseinheit 25 und der Applikationseinheit 27 sind zwei Kopplungselemente 67 an dem zweiten Ende 33 der Basiseinheit 25 vorgesehen, die sich jeweils von der Achse 37 weg zu einem freien Ende 69 erstrecken, an dem die Applikationseinheit 27 angebracht ist.

Die Basiseinheit 25 ist mit der Umlenkeinheit 29 so gekoppelt, dass die Basiseinheit 25 und die Umlenkeinheit 29 relativ zueinander um die Achse 37 verschwenkt werden können. Die Umlenkeinheit 29 ist also mit der Basiseinheit 25 um die Achse 37 schwenkbar gekoppelt.

Diese schwenkbare Kopplung zwischen der Basiseinheit 25 und der Umlenkeinheit 29 gewährleistet, dass dann, wenn die Basiseinheit 25 und somit auch die Applikationseinheit 27 um die Achse 37 verschwenkt werden, die Umlenkeinheit 29 relativ zu der Umgebung der Applikationsvorrichtung 17 nicht um die Achse 37 verschwenkt wird oder zumindest unabhängig von der Schwenkbewegung der Basiseinheit 25 und der Applikationseinheit 27 um die Achse 37 verschwenkt werden kann. Insbesondere dann, wenn die Applikationsvorrichtung 17 mithilfe des Roboterarms 11 der Robotervorrichtung 3 bewegt wird, folgt die Umlenkeinheit 29 dieser Bewegung in dem Sinne, dass die Position der Umlenkeinheit 29 zusammen mit der Position der Basiseinheit 25 und der Position der Applikationseinheit 27 verändert wird, die Orientierung der Umlenkeinheit 29 sich jedoch unabhängig von der Orientierung der Basiseinheit 25 und der Orientierung der Applikationseinheit 27 ändern kann. Insbesondere bei einer Änderung der Orientierung der Basiseinheit 25 und eine Änderung der Orientierung der Applikationseinheit 27 muss sich die Orientierung der Umlenkeinheit 29 nicht zwingend ändern. Wenn nun das Band 23 auf das Werkstück 19 aufgebracht wird, kann es notwendig sein, dass die Applikationseinheit 27 ihre Orientierung ändert, beispielsweise dann, wenn die Bahn entlang derer das Band 23 auf das Werkstück 19 aufgebracht wird, eine in sich geschlossene Bahn bildet, wie beispielsweise eine rechteckig geformte Bahn oder eine kreisförmige Bahn. Dadurch, dass die Umlenkeinheit 29 mit der Basiseinheit 25 um die Achse 37 schwenkbar gekoppelt ist, kann, während der Bewegung der Applikationseinheit 27 zum Formen der geschlossenen Bahn, die Umlenkeinheit 29 ihre Orientierung insbesondere gegenüber dem Bandspender 5 konstant halten oder nur minimal ändern. Dadurch, dass die Umlenkeinheit 29 ihre Orientierung gegenüber dem Bandspender 5 konstant halten oder nur minimal ändern kann, ist gewährleistet, dass das Band 23 so geführt werden kann, dass es von der Umlenkeinheit 29 während der gesamten Bewegung der Applikationseinheit 27 zum Formen der geschlossenen Bahn immer in demselben Abschnitt der Umlenkeinheit 29 aufgenommen werden kann. Insbesondere kann das Band 23 unabhängig von der Position und Orientierung der Applikationseinheit 27 in demselben Abschnitt der Umlenkeinheit 29 aufgenommen werden. Dies gilt für jede denkbare Form der Bahn, entlang derer das Band 23 auf das Werkstück 19 aufgebracht wird.

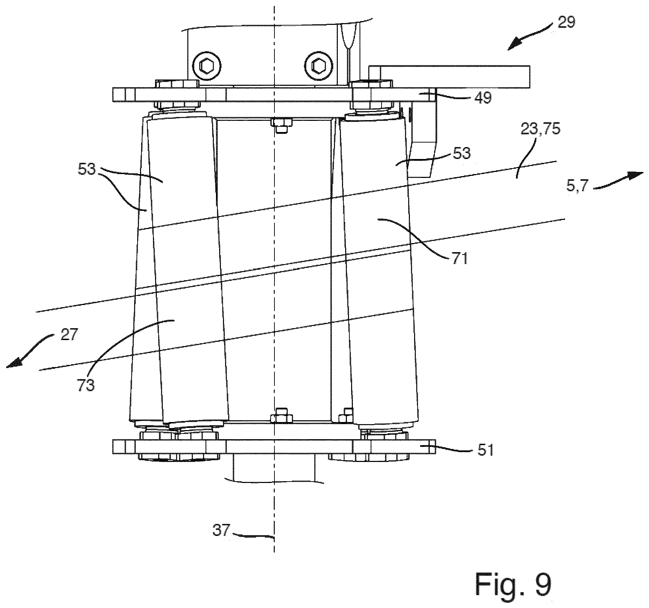

Figur 9 zeigt eine schematische Ansicht einer Führung des Bands 23 um die Umlenkeinheit 29 einer zweiten Ausführungsform der erfindungsgemäßen Applikationsvorrichtung 17 des Fertigungssystems 1 in Figur 1. Die schematische Ansicht in Figur 9 dient der Veranschaulichung und die im Zusammenhang mit Figur 9 beschriebenen Merkmale, technischen Effekte und/oder Vorteile gelten zumindest in analoger Weise auch für die in den Figuren 2 bis 8 dargestellte erste Ausführungsform der erfindungsgemäßen Applikationsvorrichtung 17. Ebenfalls gelten die im Zusammenhang mit der in den Figuren 2 bis 8 dargestellten ersten Ausführungsform der erfindungsgemäßen Applikationsvorrichtung 17 Merkmale, technischen Effekte und/oder Vorteile zumindest in analoger Weise auch für die in Figur 9 dargestellte zweite Ausführungsform der erfindungsgemäßen Applikationsvorrichtung 17.

Figur 9 zeigt schematisch, dass das Band 23 die Umlenkeinheit 29 umschlingt. Das Band 23 wird in dem Fertigungssystem 1 von dem Bandspender 5 und insbesondere der Vorspanneinrichtung 7 zu der Applikationsvorrichtung 17 und von dort auf das Werkstück 19 geführt. Innerhalb der Applikationsvorrichtung 17 wird das Band zunächst zur Umlenkeinheit 29 und anschließend zur Applikationseinheit 27 geführt. Die Umlenkeinheit 29 weist zum Führen des Bandes 23 das zweite Eingangsführungselement 55 auf, das das Band 23 zunächst so passiert, dass es zwischen den vierten Umlenkrollen 63 geführt wird. Anschließend verläuft das Band 23 entlang der Umlenkrollen 53 der Umlenkeinheit 29. Hierbei liegt das Band 23 an den Umlenkrollen 53 an und umschlingt diese. Anschließend wird das Band so geführt, dass es das erste Eingangsführungselement 41 so passiert, dass es zwischen den ersten Umlenkrollen 43 des ersten Eingangsführungselements 41 geführt wird. Anschließend verläuft das Band 23 entlang der zweiten Umlenkrollen 45 der Applikationseinheit 27 und auf das Werkstück 19 aufgebracht. In Figur 9 ist der Teil der Bandführung schematisch dargestellt, der die Führung des Bandes 23 um die Umlenkeinheit 29 beschreibt. In Figur 9 ist mit dem bei den Bezugszeichen 5 und 7 dargestellten Pfeil symbolisch dargestellt, dass das Band 23 den Bandspender 5 und insbesondere die Vorspanneinrichtung 7 passiert hat bevor das Band 23 im Bereich der Bezugszeichen 5 und 7 die Umlenkeinheit 29 erreicht. Mit dem bei dem Bezugszeichen 27 dargestellten Pfeil ist symbolisiert, dass das Band 23, nachdem es die Umlenkeinheit 29 passiert hat die Applikationseinheit 27 erreicht. Den hier beschriebenen Weg legt jeder Abschnitt des Bandes 23 zurück, bevor der entsprechende Abschnitt auf das Werkstück 19 aufgebracht wird. Bevorzugt erstreckt sich das Band von dem Bandspender 5 bis zu dem Werkstück 19 und wenn von der Weg des Bandes 23 bzw. die Bewegung des Bandes 23 durch das Fertigungssystem 1 beschrieben wird, ist damit gemeint, dass das Band Abschnitte aufweist, die diesen Weg durch das Fertigungssystem 1 zurücklegen.

Wie in Figur 9 dargestellt, verläuft die Drehachse jeder dritten Umlenkrolle 53 schräg zu der Achse 37. Die Lage der Drehachse jeder dritten Umlenkrolle 53 ist zu der Achse 37 einstellbar. Die Umlenkeinheit 29 ist wie folgt ausgestaltet. Das Band 23 umschlingt die Umlenkeinheit 29 so, dass das Band 23 an einer axialen Aufnahmeposition 71 mit der Umlenkeinheit 29 zur Anlage kommt. In dem hier dargestellten Beispiel kommt das Band 23 mit der vorne rechts dargestellten dritten Umlenkrolle 53 zur Anlage. Diese Anlage definiert die axiale Aufnahmeposition 71. Weiter umschlingt das Band 23 die Umlenkeinheit 29 so, dass das Band 23 an einer axialen Abgabeposition 73 von der Umlenkeinheit 29 gelöst wird. Die Stelle, an der das Band 23 von der Umlenkeinheit 29 gelöst wird, definiert die axiale Abgabeposition 73. Das Band 23 wird über die Umlenkeinheit 29 von der axialen Aufnahmeposition 71 zu der axialen Abgabeposition 73 geführt. Die axiale Aufnahmeposition 71 ist von der axialen Abgabeposition 73 in axialer Richtung der Achse 37 beanstandet. Die Beabstandung der axialen Aufnahmeposition 71 von der axialen Abgabeposition 73 in axialer Richtung der Achse 37 gewährleistet, dass, bei einer Bewegung der Applikationseinheit 27, sich der Abschnitt des Bandes 23 zwischen dem Bandspender 5 und der axialen Aufnahmeposition 71 nicht mit dem Abschnitt des Bandes 23 zwischen der axialen Abgabeposition 23 und der Applikationseinheit 27 berührt. Weiter ist das erste Eingangsführungselement 41 der Applikationseinheit 27 von der axialen Aufnahmeposition 71 in axialer Richtung der Achse 37 beanstandet. Die Beabstandung des ersten Eingangsführungselements 41 von der axialen Aufnahmeposition 71 in axialer Richtung der Achse 37 gewährleistet, dass dann, wenn die Applikationseinheit 27 relativ zu der Umlenkeinheit 29 verschwenkt wird, sich die axiale Abgabeposition 73 in axialer Richtung verändern kann, die axiale Abgabeposition 73 hierbei eine axiale Beabstandung von der axialen Aufnahmeposition 71 einhält.

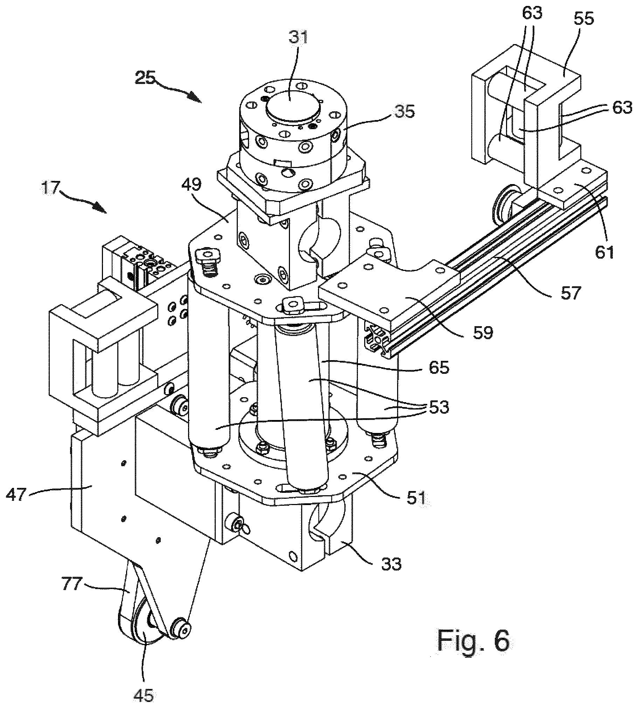

Abschließend wird darauf hingewiesen, dass in den Figuren 2-4 und in Figur 6 ein Band dargestellt ist, das sich über die zweite Umlenkrolle 45 erstreckt, die in diesen Figuren am unteren Bildrand dargestellt ist. In den hier dargestellten Beispielen ist das Band 23 ein Abschnitt eines Bandverbundes 75, der das Band 23 und einen Träger 77 aufweist. Das Band 23 und der Träger 77 sind miteinander verbunden, bis das Band 23 auf das Werkstück 19 aufgebracht wird. Der oben beschriebene Weg des Bandes 23 wird durch das Band 23 zurückgelegt, während das Band 23 mit dem Träger 77 verbunden ist. In dem Bereich, in dem das Band 23 auf das Werkstück 19 aufgebracht wird, wird das Band 23 von dem Träger 77 gelöst. In Richtung der Bandführung gesehen sind das Band 23 und der Träger 77 vor der am unteren Bildrand dargestellten zweiten Umlenkrolle 45 miteinander verbunden und nach der am unteren Bildrand dargestellten zweiten Umlenkrolle 45 sind das Band 3 20 und der Träger 77 voneinander gelöst, wobei das Band 23 nach der am unteren Bildrand dargestellten zweiten Umlenkrolle 45 auf dem Werkstück 19 aufgebracht ist und der Träger 77 mithilfe eines einer Teilmenge der zweiten Umlenkrollen 45 von der Applikationseinheit 27 geführt wird. Das hier dargestellte Beispiel mit dem Bandverbund 75 ist lediglich beispielhaft. Ebenso denkbar ist, dass kein Träger 77 vorgesehen ist und das Band 23 ohne Träger 77 den oben beschriebenen Weg durch das Fertigungssystem 1 zurücklegt.

Ergänzend sei darauf hingewiesen, dass "aufweisend" keine anderen Elemente oder Schritte ausschließt und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

### Bezugszeichen

- 1: Fertigungssystem
- 3: Robotervorrichtung
- 5: Bandspender
- 7: Vorspanneinrichtung
- 9: Rahmen
- 11: Roboterarm
- 13: erstes Ende des Roboterarms
- 15: zweites Ende des Roboterarms
- 17: Applikationsvorrichtung
- 19: Werkstück
- 21: Werkstückablage
- 23: Band
- 25: Basiseinheit
- 27: Applikationseinheit
- 29: Umlenkeinheit
- 31: erstes Ende der Basiseinheit
- 33: zweites Ende der Basiseinheit
- 35: Verbindungseinrichtung
- 37: Achse
- 39: Ausnehmung
- 41: erste Eingangsführungselement
- 43: erste Umlenkrolle des ersten Eingangsführungselements
- 45: zweite Umlenkrolle der Applikationseinheit
- 47: Plattenelement
- 49: kranzförmiges Element
- 51: weiteres kranzförmiges Element
- 53: Umlenkrolle der Umlenkeinheit, dritte Umlenkrolle
- 55: zweites Eingangsführungselement
- 57: Schwenkarm
- 59: erstes Ende des Schwenkarms
- 61: zweites Ende des Schwingamts
- 63: vierte Umlenkrolle des zweiten Eingangsführungselements
- 65: zylinderförmiges Element
- 67: Kopplungselement
- 69: freies Ende des Kopplungselements
- 71: axiale Aufnahmeposition
- 73: axiale Abgabeposition
- 75: Bandverbund
- 77: Träger

## Patentansprüche

1. Applikationsvorrichtung (17) mit
einer Basiseinheit (25), die an einem ersten Ende (31) eine Verbindungseinrichtung (35) für ein Fertigungssystem (1) aufweist und sich entlang einer Achse (37) von dem ersten Ende (31) zu einem von der Verbindungseinrichtung (35) entfernten zweiten Ende (33) erstreckt,
einer Applikationseinheit (27), die ausgestaltet ist, ein Band (23), vorzugsweise Klebeband, auf ein Werkstück (19) aufzubringen,
**dadurch gekennzeichnet, dass**
die Applikationseinheit (27) fest mit der Basiseinheit (25) an dem zweiten Ende (33) der Basiseinheit (25) gekoppelt ist, und
einer Umlenkeinheit (29), die mit der Basiseinheit (25) um die Achse (37) schwenkbar gekoppelt ist,
wobei die Applikationseinheit (27) ein erstes Eingangsführungselement (41) aufweist, über das der Applikationseinheit (27) das Band (23) zugeführt werden kann,
wobei die Umlenkeinheit (29) so ausgestaltet ist, dass das Band (23) die Umlenkeinheit (29) so umschlingen kann, dass dann, wenn es über diese von einer axialen Aufnahmeposition (71), an der es an der Umlenkeinheit (29) zur Anlage kommt, zu einer axialen Abgabeposition (73), an der es von der Umlenkeinheit (29) gelöst wird, geführt wird, die axiale Aufnahmeposition (71) von der axialen Abgabeposition (73) in axialer Richtung der Achse (37) beabstandet ist, und
wobei das erste Eingangsführungselement (41) der Applikationseinheit (27) von der axialen Aufnahmeposition (71) in axialer Richtung der Achse (37) beabstandet ist.

2. Applikationsvorrichtung (17) nach dem vorhergehenden Anspruch, wobei die Umlenkeinheit (29) ein kranzförmiges Element (49) und mindestens zwei Umlenkrollen (53) aufweist, wobei jede Umlenkrolle (53) der mindestens zwei Umlenkrollen (53) an dem kranzförmigen Element (49) drehbar gelagert ist und eine umlaufende Außenfläche aufweist, mit der die Umlenkrolle (53) beim Führen des Bands (23) auf einem Abschnitt des Bands (23) abrollen kann.

3. Applikationsvorrichtung (17) nach dem vorhergehenden Anspruch, wobei die Drehachse jeder Umlenkrolle (53) der Umlenkrollen (53) schräg zu der Achse (37) verläuft.

4. Applikationsvorrichtung (17) nach einem der Ansprüche 2 oder 3, wobei die Drehachse jeder Umlenkrolle (53) der Umlenkrollen (53) jeweils mit einer parallel zur Achse (37) verlaufenden Geraden einen Winkel von 1° bis 20° bilden.

5. Applikationsvorrichtung (17) nach einem der Ansprüche 2 bis 4, wobei die Lage der Drehachse jeder Umlenkrolle (53) der Umlenkrollen (53) zu der Achse (37) einstellbar ist.

6. Applikationsvorrichtung (17) nach einem der vorhergehenden Ansprüche, wobei die Umlenkeinheit (29) ein zweites Eingangsführungselement (55) und einen Schwenkarm (57) aufweist, der sich von seinem ersten Ende zu seinem zweiten Ende von der Achse (37) weg erstreckt, wobei an dem zweiten Ende das zweite Eingangsführungselement (55) angebracht ist, über das der Umlenkeinheit (29) das Band (23) zugeführt werden kann.

7. Applikationsvorrichtung (17) nach einem der vorhergehenden Ansprüche, wobei die Basiseinheit (25) eine sich von dem ersten Ende (31) der Basiseinheit (25) entlang der Achse (37) zu dem zweiten Ende (33) der Basiseinheit (25) erstreckende Ausnehmung (39) aufweist.

8. Robotervorrichtung (3) mit einem Rahmen (9) und einem Roboterarm (11), wobei der Roboterarm (11) mit seinem ersten Ende (13) an dem Rahmen (9) angebracht ist und mit seinem zweiten Ende (15) an der Verbindungseinrichtung (35) an dem ersten Ende (31) der Basiseinheit (25) der Applikationsvorrichtung (17) nach einem der vorhergehenden Ansprüche angebracht ist, wobei an dem zweiten Ende (15) des Roboterarms (11) ein Aktor vorgesehen ist, mit dem die Basiseinheit (25) relativ zum zweiten Ende (15) des Roboterarms (11) um die Achse (37) verschwenkt werden kann.

9. Fertigungssystem (1) mit einer Robotervorrichtung (3) nach Anspruch 8 und einem Bandspender (5) mit einer Vorspanneinrichtung (7), wobei dann, wenn das Band (23) der Applikationsvorrichtung (17) zugeführt wird, ein Abschnitt des Bandes (23) von der Vorspanneinrichtung (7) so vorgespannt wird, dass entlang des Bands (23) eine Vorspannkraft wirkt, die größer als eine vorgegebene Vorspannkraftschwelle ist.

## Claims

1. Application apparatus (17) having
a base unit (25) which has at a first end (31) a connection device (35) for a production system (1) and which extends along an axis (37) from the first end (31) to a second end (33) remote from the connection device (35),
an application unit (27) which is configured to apply a strip (23), preferably an adhesive strip, to a workpiece (19),
**characterized in that**
the application unit (27) is securely coupled to the base unit (25) at the second end (33) of the base unit (25), and
a redirection unit (29) which is coupled to the base unit (25) so as to be able to be pivoted about the axis (37),
wherein the application unit (27) has a first input guiding element (41), via which the strip (23) can be supplied to the application unit (27),
wherein the redirection unit (29) is configured in such a manner that the strip (23) can wrap around the redirection unit (29) in such a manner that, when it is guided thereby from an axial receiving position (71), at which it moves into abutment with the redirection unit (29), to an axial discharge position (73), in which it is released from the redirection unit (29), the axial receiving position (71) is spaced apart from the axial discharge position (73) in an axial direction of the axis (37), and
wherein the first input guiding element (41) of the application unit (27) is spaced apart from the axial receiving position (71) in an axial direction of the axis (37).

2. Application apparatus (17) according to the preceding claim, wherein the redirection unit (29) has a crown-like element (49) and at least two redirection rollers (53), wherein each redirection roller (53) of the at least two redirection rollers (53) is rotatably supported on the crown-like element (49) and has a circumferential outer face, by means of which the redirection roller (53) can roll when the strip (23) is guided on a portion of the strip (23).

3. Application apparatus (17) according to the preceding claim, wherein the rotation axis of each redirection roller (53) of the redirection rollers (53) extends obliquely relative to the axis (37).

4. Application apparatus (17) according to either of Claims 2 and 3, wherein the rotation axis of each redirection roller (53) of the redirection rollers (53) in each case forms an angle of from 1° to 20° with a straight line which extends parallel with the axis (37).

5. Application apparatus (17) according to any one of Claims 2 to 4, wherein the position of the rotation axis of each redirection roller (53) of the redirection rollers (53) can be adjusted with respect to the axis (37).

6. Application apparatus (17) according to any one of the preceding claims, wherein the redirection unit (29) has a second input guiding element (55) and a pivot arm (57) which extends from the first end thereof to the second end thereof away from the axis (37), wherein at the second end the second input guiding element (55), via which the strip (23) can be supplied to the redirection unit (29), is fitted.

7. Application apparatus (17) according to any one of the preceding claims, wherein the base unit (25) has a recess (39) which extends from the first end (31) of the base unit (25) along the axis (37) to the second end (33) of the base unit (25).

8. Robot apparatus (3) having a frame (9) and a robot arm (11), wherein the robot arm (11) is fitted with the first end (13) thereof to the frame (9) and with the second end (15) thereof to the connection device (35) at the first end (31) of the base unit (25) of the application apparatus (17) according to any one of the preceding claims, wherein at the second end (15) of the robot arm (11) there is provided an actuator, by means of which the base unit (25) can be pivoted about the axis (37) relative to the second end (15) of the robot arm (11).

9. Production system (1) having a robot apparatus (3) according to Claim 8 and a strip dispenser (5) having a pretensioning device (7), wherein, when the strip (23) is supplied to the application apparatus (17), a portion of the strip (23) is pretensioned by the pretensioning device (7) in such a manner that a pretensioning force which is greater than a predetermined pretensioning force threshold acts along the strip (23).

## Revendications

1. Dispositif d'application (17) comprenant
une unité de base (25), munie, à une première extrémité (31), d'un dispositif de raccordement (35) pour un système de fabrication (1) et s'étendant le long d'un axe (37) depuis la première extrémité (31) jusqu'à une deuxième extrémité (33) éloignée du dispositif de raccordement (35),
une unité d'application (27), qui est conçue pour appliquer une bande (23), de préférence une bande adhésive, sur une pièce (19),
**caractérisé en ce que**
l'unité d'application (27) est reliée fixement à l'unité de base (25) à la deuxième extrémité (33) de l'unité de base (25), et
à une unité de déviation (29) qui est reliée à l'unité de base (25) de manière à être apte à pivoter autour de l'axe (37),
l'unité d'application (27) comprenant un premier élément de guidage d'entrée (41) via lequel la bande (23) est amenée à l'unité d'application (27),
l'unité de déviation (29) étant conçue de telle sorte que la bande (23) est apte à s'enrouler autour de l'unité de déviation (29) de telle sorte que, lorsqu'elle est guidée par celle-ci depuis une position de réception axiale (71), dans laquelle elle vient en contact avec l'unité de déviation (29), vers une position de libération axiale (73) dans laquelle elle est libérée de l'unité de déviation (29), la position de réception axiale (71) est espacée de la position de libération axiale (73) dans la direction axiale de l'axe (37), et
le premier élément de guidage d'entrée (41) de l'unité d'application (27) étant espacé de la position de réception axiale (71) dans la direction axiale de l'axe (37).

2. Dispositif d'application (17) selon la revendication précédente, dans lequel l'unité de déviation (29) comprend un élément en forme de couronne (49) et au moins deux rouleaux de déviation (53), chaque rouleau de déviation (53) desdits au moins deux rouleaux de déviation (53) étant monté de manière rotative sur l'élément en forme de couronne (49) et comprend une surface extérieure périphérique avec laquelle le rouleau de déviation (53) est apte à rouler sur une partie de la bande (23) lors du guidage de la bande (23).

3. Dispositif d'application (17) selon la revendication précédente, dans lequel l'axe de rotation de chaque rouleau de déviation (53) des rouleaux de déviation (53) s'étend obliquement par rapport à l'axe (37).

4. Dispositif d'application (17) selon l'une des revendications 2 et 3, dans lequel l'axe de rotation de chaque rouleau de déviation (53) parmi les rouleaux de déviation (53) forme respectivement un angle de 1° à 20° avec une ligne droite s'étendant parallèlement à l'axe (37).

5. Dispositif d'application (17) selon l'une des revendications 2 à 4, dans lequel la position de l'axe de rotation de chaque rouleau de déviation (53) parmi les rouleaux de déviation (53) est réglable par rapport à l'axe (37).

6. Dispositif d'application (17) selon l'une des revendications précédentes, dans lequel l'unité de déviation (29) comprend un deuxième élément de guidage d'entrée (55) et un bras pivotant (57) qui s'étend de sa première extrémité à sa deuxième extrémité à partir de l'axe (37), sur la deuxième extrémité étant monté le deuxième élément de guidage d'entrée (55), par lequel la bande (23) est apte à être amenée à l'unité de déviation (29).

7. Dispositif d'application (17) selon l'une des revendications précédentes, dans lequel l'unité de base (25) présente un évidement (39) s'étendant depuis la première extrémité (31) de l'unité de base (25) le long de l'axe (37) jusqu'à la deuxième extrémité (33) de l'unité de base (25).

8. Dispositif robotique (3) comprenant un châssis (9) et un bras robotique (11), le bras robotique (11) étant fixé par sa première extrémité (13) au châssis (9) et, par sa deuxième extrémité (15), au dispositif de liaison (35) sur la première extrémité (31) de l'unité de base (25) du dispositif d'application (17) selon l'une des revendications précédentes, un actionneur étant prévu à la deuxième extrémité (15) du bras robotique (11), au moyen duquel l'unité de base (25) est apte à être pivotée autour de l'axe (37) par rapport à la deuxième extrémité (15) du bras robotique (11).

9. Système de fabrication (1) comprenant un dispositif robotique (3) selon la revendication 8 et un distributeur de bande (5) équipé d'un dispositif de pré-tension (7), dans lequel, lorsque la bande (23) est amenée au dispositif d'application (17), une partie de la bande (23) est pré-tendue par le dispositif de pré-tension (7) de telle sorte qu'une force de pré-tension qui est supérieure à un seuil de force de pré-tension prédéfini s'exerce le long de la bande (23).
